# EUROPÄISCHE PATENTSCHRIFT

(11) **EP 4 015 319 B1**
(45) Veröffentlichungstag und Bekanntmachung des Hinweises auf die Patenterteilung: **06.03.2024**
(21) Anmeldenummer: 20216004.0
(22) Anmeldetag: 21.12.2020
(51) Int. Cl.: B60S 1/56, B60S 1/52, B60S 1/60

(54) **SELBSTREINIGENDES FAHRZEUGSENSORSYSTEM**
SELF-CLEANING VEHICLE SENSOR SYSTEM
SYSTÈME DE CAPTEUR DE VÉHICULE AUTO-NETTOYANT

(43) Veröffentlichungstag der Anmeldung: 22.06.2022
(73) Patentinhaber: ZKW Group GmbH, 3250 Wieselburg (AT)
(72) Erfinder: Pitterle, Georg, 3241 Kirnberg an der Mank (AT); Jackl, Christian, 3250 Wieselburg (AT); Reiter, Thomas, 3325 Ferschnitz (AT)
(74) Vertreter: Patentanwaltskanzlei Matschnig & Forsthuber OG

(56) Entgegenhaltungen:
- EP-A1- 3 640 099
- WO-A1-2020/100892
- DE-A1-102006 016 165
- DE-A1-102007 002 257
- DE-A1-102011 010 706
- DE-A1-102014 210 608
- US-A1- 2020 180 563

## Beschreibung

Die Erfindung betrifft ein selbstreinigendes Fahrzeugsensorsystem, umfassend zumindest eine zumindest abschnittsweise lichtdurchlässige, insbesondere transparente, Scheibe, zumindest einen hinter der Scheibe angeordneten Sensor, und eine zumindest teilweise vor der Scheibe angeordnete Scheibenreinigungsvorrichtung. Die Scheibe kann dabei z.B. in einem Abschnitt teilweise lichtdurchlässig und in einem anderen Abschnitt opak ausgebildet sein. Jener Bereich der Scheibe, der den Sensor überdeckt und im Erfassungsbereich des Sensors liegt, ist für die von dem Sensor zu erfassende Signalart durchlässig. So könnte die Scheibe z.B. lichtundurchlässig für sichtbares Licht sein und gleichzeitig durchlässig für elektromagnetische Wellen abweichender Wellenlänge - beispielsweise einem Wellenlängenbereich, der für die LIDAR-Technik eingesetzt wird.

Bei zukünftiger Integration von optischen Sensoren in Scheinwerfersystemen oder Heckleuchtensystemen oder hinter einer Windschutzscheibe/Heckscheibe sind die Anforderungen an eine freie Sicht (Reinigung, Enteisungs/Enttauung) deutlich höher als bisher, da die Sensoren eine möglichst freie Sicht benötigen, um zuverlässig arbeiten zu können. Aktuell verfügbare Reinigungssysteme umfassen für diesen Zweck z.B. herkömmliche Scheibenwischer, Waschdüsen, Hochdruckwaschdüsen oder Vorrichtungen zur Luftdruckreinigung. WO-A-2020100892 offenbart den Oberbegriff des Anspruchs 1.

Eine Aufgabe der Erfindung besteht darin, eine verbessere Reinigung zu ermöglichen. Die Erfindung wird durch die Ansprüche definiert. Diese Aufgabe wird mit einem selbstreinigenden Fahrzeugsensorsystem der eingangs genannten Art gelöst, bei welchem erfindungsgemäß der zumindest eine Sensor zur Erfassung von Verschmutzungen der Scheibe eingerichtet ist, wobei das Fahrzeugsensorsystem zudem eine Recheneinheit umfasst, die mit dem zumindest einen Sensor verbunden ist, und die dazu eingerichtet ist, mit Hilfe eines von dem Sensor abgegebenen Sensorsignals die Position der Verschmutzung an der Scheibe zu berechnen und in Abhängigkeit davon ein gezieltes Steuersignal an die Scheibenreinigungsvorrichtung auszugeben, wobei die Scheibenreinigungsvorrichtung zur Abgabe eines in seiner Orientierung gezielt veränderbaren durch ein flüssiges Medium gebildeten Reinigungsstrahles eingerichtet ist, wobei zum gezielten Entfernen der Verunreinigung die Festlegung der Orientierung des Reinigungsstrahles in Abhängigkeit von dem Steuersignal der Recheneinheit erfolgt.

Auf diese Weise kann eine gezielte Reinigung einer verschmutzten Scheibe erfolgen. Indem der Reinigungsstrahl gezielt auf verschmutzte Bereiche gelenkt wird, erfolgt die Reinigung rascher und effizienter als bei herkömmlichen Reinigungssystemen. Dadurch wird sichergestellt, dass eine aufgrund von Verschmutzung kurzfristig eingeschränkte Einsatzfähigkeit eines Sensors rasch behoben wird und der Sensor wieder vollständig einsatzfähig ist.

Nach der Erfindung ist es vorgesehen, dass die Scheibenreinigungsvorrichtung eine regelbare Düse zur Abgabe des Reinigungsstrahles umfasst, wobei die Düse dazu eingerichtet ist, den Reinigungsstrahl in Abhängigkeit von dem Druck des Mediums in der Düse zu regeln, indem eine Austrittsöffnung der Düse in ihrer Orientierung entgegen der Kraft eines Rückstellelements, insbesondere einer Druckfeder, veränderbar ist.

Weiters kann vorgesehen sein, dass ebenso die Intensität des Reinigungsstrahles mit Hilfe des Steuersignals veränderbar ist, indem der Druck des Reinigungsstrahls manipuliert wird.

Insbesondere kann vorgesehen sein, dass der durch den zumindest einen Sensor erfasste Bereich der Scheibe zumindest eine Fläche von 100 cm² umfasst.

Weiters kann vorgesehen sein, dass die Scheibenreinigungsvorrichtung dazu eingerichtet ist, den Reinigungsstrahl auf jeden Punkt an der Oberfläche der Scheibe innerhalb dieser Fläche von 100 cm² mit einer Abweichung von maximal 1cm zu erfassen.

Insbesondere kann vorgesehen sein, dass die Scheibenreinigungsvorrichtung zur Abgabe von zwei oder mehr in ihrer Orientierung steuerbaren Reinigungsstrahlen eingerichtet ist.

Weiters kann vorgesehen sein, dass jedem Reinigungsstrahl eine Düse zugeordnet ist, wobei jeder Düse ein getrennter Flüssigkeitszufuhrkanal zugeordnet ist.

Insbesondere kann vorgesehen sein, dass jedem Flüssigkeitszufuhrkanal eine eigene Pumpe zur Erzeugung des Strahldruckes des Reinigungsstrahls zugeordnet ist.

Weiters kann vorgesehen sein, dass der zumindest eine Sensor auch zur Umfelderfassung durch die Scheibe hindurch eingerichtet ist. Das bedeutet, dass der Sensor die Fahrzeugumgebung, beispielsweise einen Straßenverlauf, Verkehrsschilder, Hindernisse, und/oder Verkehrsteilnehmer erfassen kann.

Insbesondere kann vorgesehen sein, dass der zumindest eine Sensor einen Kamerasensor, einen LIDAR-Sensor und/oder einen kapazitiven Sensor umfasst.

Weiters kann vorgesehen sein, dass das selbstreinigende Fahrzeugsensorsystem zumindest zwei Sensoren aufweist, wobei ein erster Sensor zur Erkennung von Verschmutzungen der Scheibe eingerichtet ist und ein zweiter Sensor für die Umfelderfassung optimiert ist.

Insbesondere kann vorgesehen sein, dass der Fahrzeugscheinwerfer eine Abdeckscheibe aufweist, durch die Licht des Fahrzeugscheinwerfers nach außen abstrahlbar ist, wobei der zumindest eine Sensor hinter der Abdeckscheibe angeordnet ist und dazu eingerichtet ist, Verschmutzungen der Abdeckscheibe zu erfassen.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen selbstreinigenden Fahrzeugsensorsystems,
Figur 2 eine schematische Darstellung eines Ausschnittes einer Scheibenreinigungsvorrichtung in einem ersten Betriebszustand,
Figur 3 eine schematische Darstellung eines Ausschnittes der Scheibenreinigungsvorrichtung nach Fig. 2 in einem zweiten Betriebszustand,
Figur 4 eine schematische Darstellung eines Ausschnittes sowie der Funktion einer Scheibenreinigungsvorrichtung im Detail, und
Figur 5 Beispiele für einfache Strahlbilder.

In den folgenden Figuren bezeichnen - sofern nicht anders angegeben - gleiche Bezugszeichen gleiche Merkmale.

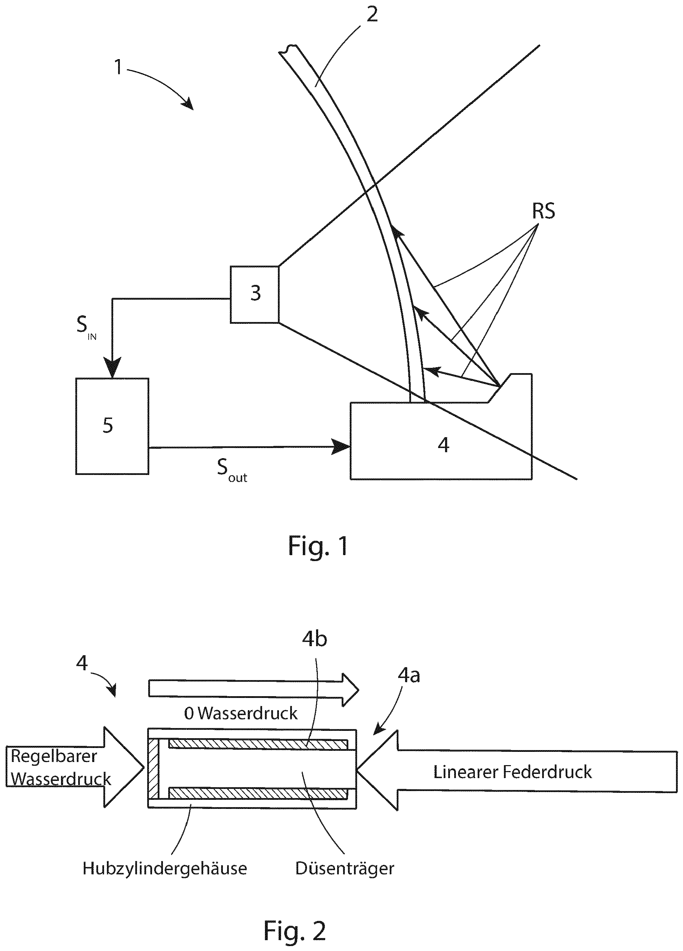

Figur 1 zeigt eine schematische Darstellung eines erfindungsgemäßen selbstreinigenden Fahrzeugsensorsystems 1. Das System 1 umfasst zumindest eine zumindest abschnittsweise lichtdurchlässige, insbesondere transparente, Scheibe 2, zumindest einen hinter der Scheibe 2 angeordneten Sensor 3, und eine zumindest teilweise vor der Scheibe 2 angeordnete Scheibenreinigungsvorrichtung 4. Der zumindest eine Sensor 3 ist zur Erfassung von Verschmutzungen der Scheibe 2 eingerichtet. Das Fahrzeugsensorsystem 1 umfasst zudem eine Recheneinheit 5, die mit dem zumindest einen Sensor 3 verbunden ist, und die dazu eingerichtet ist, mit Hilfe eines von dem Sensor 3 abgegebenen Sensorsignals Sᵢₙ die Position der Verschmutzung an der Scheibe zu berechnen und in Abhängigkeit davon ein gezieltes Steuersignal Sₒᵤₜ an die Scheibenreinigungsvorrichtung 4 auszugeben. Alternativ kann die Recheneinheit 5 auch im Sensor 3 integriert sein.

Die Scheibenreinigungsvorrichtung 4 ist zur Abgabe eines in seiner Orientierung gezielt veränderbaren durch ein flüssiges Medium (beispielsweise Wasser bzw. eine wässrige Reinigungslösung) gebildeten Reinigungsstrahles RS eingerichtet ist, wobei zum gezielten Entfernen der Verunreinigung die Festlegung der Orientierung des Reinigungsstrahles RS in Abhängigkeit von dem Steuersignal Sₒᵤₜ der Recheneinheit 5 erfolgt.

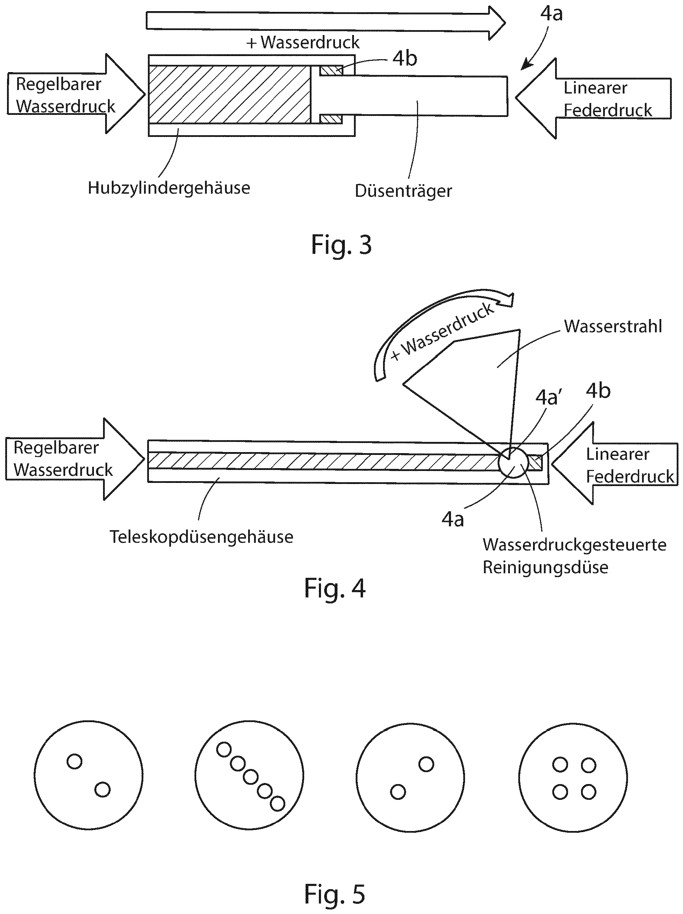

Figur 2 zeigt eine schematische Darstellung eines Ausschnittes einer Scheibenreinigungsvorrichtung 4 in einem ersten Betriebszustand. Darin ist in Zusammenschau mit Fig. 3 ein Funktionsprinzip gezeigt, demnach ein Reinigungsstrahl bzw. die Position und Orientierung einer Düse 4a in Abhängigkeit von dem Druck des Mediums für den Reinigungsstrahl, insbesondere des Wasserdrucks, geregelt werden kann. Figur 3 zeigt dabei eine schematische Darstellung eines Ausschnittes der Scheibenreinigungsvorrichtung nach Fig. 2 in einem zweiten Betriebszustand, indem ein Düsenträger aufgrund des vorliegenden (erhöhten Wasserdruckes) in seiner Position verändert wird und damit in eine geeignete Position verfahren wird, um einen Reinigungsstrahl RS abzugeben. Einzelne Komponenten des Systems sind auch in den Figuren beschrieben. Die Scheibenreinigungsvorrichtung 4 weist eine regelbare Düse 4a zur Abgabe des Reinigungsstrahles RS auf, wobei die Düse 4a dazu eingerichtet ist, den Reinigungsstrahl RS in Abhängigkeit von dem Druck des Mediums in der Düse 4a zu regeln, indem eine Austrittsöffnung 4a' der Düse in ihrer Orientierung entgegen der Kraft eines Rückstellelements 4b, insbesondere einer Druckfeder, veränderbar ist. Das selbstreinigendes Fahrzeugsensorsystem 1 ist dabei vorzugsweise so ausgebildet, dass die Intensität des Reinigungsstrahles RS mit Hilfe des Steuersignals Sₒᵤₜ veränderbar ist, indem der Druck des Reinigungsstrahls RS manipuliert wird. Hierfür kommen Elemente wie z.B. eine Rotationsdüse, ein Schieber, ein Drehscheibenventil usw. in Frage. Dem Fachmann in Anbetracht dieser Lehre geeignete Komponenten bekannt, mit denen der besagte Reinigungsstrahl umgesetzt werden kann. Das Erhöhen des Wasserdrucks kann die Orientierung des Reinigungsstrahls RS beeinflussen. Dies bedeutet z.B. dass bei einem geringen Druck eine "Startposition" bzw. bei hohem Druck eine "Endposition" gewählt werden kann. Durch ein Druckprofil (Stufenförmig, Linear) kann ein Bewegungsprofil erzeugt werden. Durch einen Pulsbetrieb kann eine Position gehalten werden und die Intensität gezielt erhöht werden. In der Endposition kann der Druck beliebig erhöht werden.

Vorzugsweise kann vorgesehen sein, dass der durch den zumindest einen Sensor 3 erfasste Bereich der Scheibe 2 zumindest eine Fläche von 100 cm² umfasst. Insbesondere kann vorgesehen sein, dass die Scheibenreinigungsvorrichtung 4 dazu eingerichtet ist, den Reinigungsstrahl RS auf jeden Punkt an der Oberfläche der Scheibe 2 innerhalb dieser Fläche von 100 cm² mit einer Abweichung von maximal 1cm zu erfassen.

In Fig. 3 ist erkennbar, dass durch Wasserdruck bzw. einen Motor der Düsenträger zunächst ausgefahren wird. Die Reinigungsdüse erzeugt einen gerichteten Wasserstrahl. Durch Variation des Wasserdrucks kann die Strahlrichtung der Wasserstrahllinie gesteuert und somit ein genau definierter Bereich gereinigt werden. Die verstellbaren Elemente werden gegen ein Federelement vorgespannt. Gegen diese Elemente wirkt der Wasserdruck und dadurch werden die Elemente verstellt. Durch Veränderung des Wasserdrucks bzw. durch einen Motor wird die Ausrichtung der Reinigungsdüse geregelt. Durch die Vorspannung der Feder wird der minimale Druck definiert, bei dem noch keine Bewegung stattfindet und lediglich der Düsenträger ausgefahren wird. Durch die Auswahl der Feder und dessen Federkennlinie, welcher eine Kraft entgegenwirkt (welche dem Wasserstrahl RS entspringt) kann die Reinigungsdüse gerichtet werden. Fig. 4 zeigt eine schematische Darstellung eines Ausschnittes sowie der Funktion einer Scheibenreinigungsvorrichtung 4.

Ganz allgemein kann ein Reinigungsvorgang durch eine erfindungsgemäßes System 1 aktiviert werden, indem Verschmutzung mittels dem Sensor 3 erkannt wird, wobei dabei die Position der Verschmutzung an die Recheneinheit 5 übermittelt wird. Durch diesen Auslöser kann der Reinigungsprozess gestartet werden, und ein Reinigungsstrahl RS gezielt an die verunreinigte Stelle gelenkt werden. Insbesondere können für die Aktivierung des Systems 1 folgende Möglichkeiten in Betracht kommen:
1. Manuelle Aktivierung z.B. in Kombination mit der Aktivierung der Windschutzscheibenreinigung
2. Sensor im Scheinwerfer erkennt die Verschmutzung aufgrund möglicher Detektion von optischen Hindernissen bzw. erkennt ein Bilderkennungsalgorithmus Verunreinigungen.

Figur 5 zeigt Beispiele für einfache unterschiedliche Strahlbilder, die durch unterschiedliche Formen von Düsenöffnungen erzeugt werden können. Die Scheibenreinigungsvorrichtung 4 kann damit zur Abgabe von zwei oder mehr in ihrer Orientierung steuerbaren Reinigungsstrahlen RS eingerichtet sein.

Grundsätzlich kann auch jedem Reinigungsstrahl RS eine Düse 4a zugeordnet sein, wobei jeder Düse 4a ein getrennter Flüssigkeitszufuhrkanal zugeordnet ist. Insbesondere kann vorgesehen sein, dass jedem Flüssigkeitszufuhrkanal eine eigene Pumpe zur Erzeugung des Strahldruckes des Reinigungsstrahls RS zugeordnet ist. Auch kann vorgesehen sein, dass (wie in Fig. 1 erkennbar) der zumindest eine Sensor 3 auch zur Umfelderfassung durch die Scheibe 2 hindurch eingerichtet ist. Der zumindest eine Sensor 3 kann einen Kamerasensor, einen LIDAR-Sensor und/oder einen kapazitiven Sensor umfassen.

Auch kann vorgesehen sein, dass das selbstreinigende Fahrzeugsensorsystem 1 zumindest zwei Sensoren aufweist, wobei ein erster Sensor zur Erkennung von Verschmutzungen der Scheibe eingerichtet ist und ein zweiter Sensor für die Umfelderfassung optimiert ist.

Auch kann die Erfindung ein in den Figuren nicht dargestelltes Fahrzeug betreffen, das ein erfindungsgemäßes selbstreinigendes Fahrzeugsensorsystem 1 umfasst sowie einen mit dem Fahrzeugsensorsystem 1 gekoppelten Fahrzeugscheinwerfer, wobei der Fahrzeugscheinwerfer eine Abdeckscheibe aufweist, durch die Licht des Fahrzeugscheinwerfers nach außen abstrahlbar ist, wobei der zumindest eine Sensor 3 hinter der Abdeckscheibe angeordnet ist und dazu eingerichtet ist, Verschmutzungen der Abdeckscheibe zu erfassen und der Reinigungsstrahl zur Reinigung diese Abdeckscheibe vorgesehen ist.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Selbstreinigendes Fahrzeugsensorsystem (1), umfassend
- zumindest eine zumindest abschnittsweise lichtdurchlässige, insbesondere transparente, Scheibe (2),
- zumindest einen hinter der Scheibe (2) angeordneten Sensor (3),
- eine zumindest teilweise vor der Scheibe (2) angeordnete Scheibenreinigungsvorrichtung (4),
wobei der zumindest eine Sensor (3) zur Erfassung von Verschmutzungen der Scheibe (2) eingerichtet ist, wobei das Fahrzeugsensorsystem (1) zudem eine Recheneinheit (5) umfasst, die mit dem zumindest einen Sensor (3) verbunden ist, und die dazu eingerichtet ist, mit Hilfe eines von dem Sensor (3) abgegebenen Sensorsignals (Sᵢₙ) die Position der Verschmutzung an der Scheibe zu berechnen und in Abhängigkeit davon ein gezieltes Steuersignal (Sₒᵤₜ) an die Scheibenreinigungsvorrichtung (4) auszugeben,
wobei die Scheibenreinigungsvorrichtung (4) zur Abgabe eines in seiner Orientierung gezielt veränderbaren durch ein flüssiges Medium gebildeten Reinigungsstrahles (RS) eingerichtet ist, wobei zum gezielten Entfernen der Verunreinigung die Festlegung der Orientierung des Reinigungsstrahles (RS) in Abhängigkeit von dem Steuersignal (Sₒᵤₜ) der Recheneinheit (5) erfolgt, wobei die Scheibenreinigungsvorrichtung (4) eine regelbare Düse (4a) zur Abgabe des Reinigungsstrahles (RS) umfasst,
**dadurch gekennzeichnet, dass** die Düse (4a) dazu eingerichtet ist, den Reinigungsstrahl (RS) in Abhängigkeit von dem Druck des Mediums in der Düse (4a) zu regeln, indem eine Austrittsöffnung (4a') der Düse in ihrer Orientierung entgegen der Kraft eines Rückstellelements (4b), insbesondere einer Druckfeder, veränderbar ist, wobei die Düse (4a) von einem Düsenträger getragen wird, der durch Wasserdruck ausgefahren wird,
wobei der Düsenträger gegen eine Feder gespannt ist, wobei durch die die Vorspannung der Feder ein minimaler Druck definiert wird, bei dem noch keine Bewegung der Düse (4a) in Bezug auf den Düsenträger stattfindet, wobei der minimale Druck allerdings dazu ausreicht, den Düsenträger auszufahren.

2. Selbstreinigendes Fahrzeugsensorsystem (1) nach Anspruch 1, wobei ebenso die Intensität des Reinigungsstrahles (RS) mit Hilfe des Steuersignals (Sₒᵤₜ) veränderbar ist, indem der Druck des Reinigungsstrahls (RS) manipuliert wird.

3. Selbstreinigendes Fahrzeugsensorsystem (1) nach einem der vorhergehenden Ansprüche, wobei der durch den zumindest einen Sensor (3) erfasste Bereich der Scheibe (2) zumindest eine Fläche von 100 cm² umfasst.

4. Selbstreinigendes Fahrzeugsensorsystem (1) nach Anspruch 3, wobei die Scheibenreinigungsvorrichtung (4) dazu eingerichtet ist, den Reinigungsstrahl (RS) auf jeden Punkt an der Oberfläche der Scheibe (2) innerhalb dieser Fläche von 100 cm² mit einer Abweichung von maximal 1cm zu erfassen.

5. Selbstreinigendes Fahrzeugsensorsystem (1) nach einem der vorhergehenden Ansprüche, wobei die Scheibenreinigungsvorrichtung (4) zur Abgabe von zwei oder mehr in ihrer Orientierung steuerbaren Reinigungsstrahlen (RS) eingerichtet ist.

6. Selbstreinigendes Fahrzeugsensorsystem (1) nach Anspruch 5, wobei jedem Reinigungsstrahl (RS) eine Düse (4a) zugeordnet ist, wobei jeder Düse (4a) ein getrennter Flüssigkeitszufuhrkanal zugeordnet ist.

7. Selbstreinigendes Fahrzeugsensorsystem (1) nach Anspruch 6, wobei, jedem Flüssigkeitszufuhrkanal eine eigene Pumpe zur Erzeugung des Strahldruckes des Reinigungsstrahls (RS) zugeordnet ist.

8. Selbstreinigendes Fahrzeugsensorsystem (1) nach einem der vorhergehenden Ansprüche, wobei der zumindest eine Sensor (3) auch zur Umfelderfassung durch die Scheibe (2) hindurch eingerichtet ist.

9. Selbstreinigendes Fahrzeugsensorsystem (1) nach einem der vorhergehenden Ansprüche, wobei der zumindest eine Sensor (3) einen Kamerasensor, einen LIDAR-Sensor und/oder einen kapazitiven Sensor umfasst.

10. Selbstreinigendes Fahrzeugsensorsystem (1) nach einem der vorhergehenden Ansprüche, wobei das selbstreinigende Fahrzeugsensorsystem (1) zumindest zwei Sensoren aufweist, wobei ein erster Sensor zur Erkennung von Verschmutzungen der Scheibe eingerichtet ist und ein zweiter Sensor für die Umfelderfassung optimiert ist.

11. Fahrzeug umfassend ein selbstreinigendes Fahrzeugsensorsystem (1) nach einem der vorhergehenden Ansprüche und einen mit dem Fahrzeugsensorsystem (1) gekoppelten Fahrzeugscheinwerfer, wobei der Fahrzeugscheinwerfer eine Abdeckscheibe aufweist, durch die Licht des Fahrzeugscheinwerfers nach außen abstrahlbar ist, wobei der zumindest eine Sensor (3) hinter der Abdeckscheibe angeordnet ist und dazu eingerichtet ist, Verschmutzungen der Abdeckscheibe zu erfassen.

## Claims

1. Self-cleaning vehicle sensor system (1), comprising
- at least one at least partially translucent, in particular transparent, pane (2),
- at least one sensor (3) arranged behind the window (2),
- a windshield cleaning device (4) arranged at least partially in front of the windshield (2),
wherein
the at least one sensor (3) is set up to detect soiling of the windshield (2), the vehicle sensor system (1) additionally comprising a computing unit (5) which is connected to the at least one sensor (3) and which is set up to calculate the position of the soiling on the windshield with the aid of a sensor signal (Sin) emitted by the sensor (3) and to output a targeted control signal (Sout) to the windshield cleaning device (4) as a function thereof,
wherein the window cleaning device (4) is set up to emit a cleaning jet (RS) formed by a liquid medium, the orientation of which can be selectively varied, wherein the orientation of the cleaning jet (RS) is determined as a function of the control signal (Sout) of the computing unit (5) in order to selectively remove the soiling, wherein the window cleaning device (4) comprises a controllable nozzle (4a) for emitting the cleaning jet (RS),
**characterized in that** the nozzle (4a) is set up to regulate the cleaning jet (RS) as a function of the pressure of the medium in the nozzle (4a), **in that** an outlet opening (4a') of the nozzle can be changed in its orientation counter to the force of a resetting element (4b), in particular a compression spring, the nozzle (4a) being supported by a nozzle carrier, which is extended by water pressure, the nozzle carrier being tensioned against a spring, the pretensioning of the spring defining a minimum pressure at which no movement of the nozzle (4a) takes place in relation to the nozzle carrier, the minimum pressure being sufficient, however, to extend the nozzle carrier.

2. Self-cleaning vehicle sensor system (1) according to claim 1, wherein the intensity of the cleaning jet (RS) can also be changed with the aid of the control signal (Sout) by manipulating the pressure of the cleaning jet (RS).

3. Self-cleaning vehicle sensor system (1) according to one of the preceding claims, wherein the area of the windshield (2) detected by the at least one sensor (3) comprises at least an area of 100 cm².

4. Self-cleaning vehicle sensor system (1) according to claim 3, wherein the windshield cleaning device (4) is set up to detect the cleaning jet (RS) at each point on the surface of the windshield (2) within this area of 100 cm² with a maximum deviation of 1 cm.

5. Self-cleaning vehicle sensor system (1) according to one of the preceding claims, wherein the windshield cleaning device (4) is arranged to emit two or more cleaning jets (RS) controllable in their orientation.

6. Self-cleaning vehicle sensor system (1) according to claim 5, wherein a nozzle (4a) is assigned to each cleaning jet (RS), wherein a separate liquid supply channel is assigned to each nozzle (4a).

7. Self-cleaning vehicle sensor system (1) according to claim 6, wherein a separate pump for generating the jet pressure of the cleaning jet (RS) is assigned to each liquid supply channel.

8. Self-cleaning vehicle sensor system (1) according to one of the preceding claims, wherein the at least one sensor (3) is also set up to detect the environment through the windshield (2).

9. Self-cleaning vehicle sensor system (1) according to one of the preceding claims, wherein the at least one sensor (3) comprises a camera sensor, a LIDAR sensor and/or a capacitive sensor.

10. Self-cleaning vehicle sensor system (1) according to one of the preceding claims, wherein the self-cleaning vehicle sensor system (1) has at least two sensors, wherein a first sensor is set up to detect soiling of the windscreen and a second sensor is optimized for environment detection.

11. Vehicle comprising a self-cleaning vehicle sensor system (1) according to one of the preceding claims and a vehicle headlamp coupled to the vehicle sensor system (1), wherein the vehicle headlamp has a cover lens through which light from the vehicle headlamp can be radiated outwards, wherein the at least one sensor (3) is arranged behind the cover lens and is set up to detect soiling of the cover lens.

## Revendications

1. Système de détection autonettoyant pour véhicule (1), comprenant
- au moins une vitre (2) au moins partiellement translucide, en particulier transparente,
- au moins un capteur (3) disposé derrière la vitre (2),
- un dispositif de nettoyage de vitre (4) disposé au moins partiellement devant la vitre (2),
dans lequel
l'au moins un capteur (3) est conçu pour détecter des salissures de la vitre (2), le système de capteurs de véhicule (1) comprenant en outre une unité de calcul (5) qui est reliée à l'au moins un capteur (3) et qui est conçue pour calculer, à l'aide d'un signal de capteur (Sin) délivré par le capteur (3), la position de la salissure sur la vitre et pour délivrer, en fonction de celle-ci, un signal de commande ciblé (Sout) au dispositif de nettoyage de vitre (4),
le dispositif de nettoyage de vitre (4) étant conçu pour délivrer un jet de nettoyage (RS) dont l'orientation peut être modifiée de manière ciblée et qui est formé par un milieu liquide, la détermination de l'orientation du jet de nettoyage (RS) étant effectuée en fonction du signal de commande (Sout) de l'unité de calcul (5) pour l'élimination ciblée de la salissure, le dispositif de nettoyage de vitre (4) comprenant une buse réglable (4a) pour délivrer le jet de nettoyage (RS),
**caractérisé en ce que** la buse (4a) est conçue pour régler le jet de nettoyage (RS) en fonction de la pression du fluide dans la buse (4a), **en ce qu'**une ouverture de sortie (4a') de la buse peut être modifiée dans son orientation à l'encontre de la force d'un élément de rappel (4b), en particulier d'un ressort de pression, la buse (4a) étant portée par un support de buse, qui est déployé par la pression de l'eau, le porte-buse étant tendu contre un ressort, la précontrainte du ressort définissant une pression minimale pour laquelle il n'y a pas encore de mouvement de la buse (4a) par rapport au porte-buse, la pression minimale étant toutefois suffisante pour déployer le porte-buse.

2. Système de détection autonettoyant pour véhicule (1) selon la revendication 1, dans lequel l'intensité du jet de nettoyage (RS) peut également être modifiée au moyen du signal de commande (Sout) en manipulant la pression du jet de nettoyage (RS).

3. Système de détection autonettoyant pour véhicule (1) selon l'une des revendications précédentes, dans lequel la zone de la vitre (2) détectée par le au moins un capteur (3) comprend au moins une surface de 100 cm².

4. Système de détection autonettoyant pour véhicule (1) selon la revendication 3, dans lequel le dispositif de nettoyage de vitre (4) est agencé pour détecter le faisceau de nettoyage (RS) sur chaque point de la surface de la vitre (2) à l'intérieur de cette surface de 100 cm² avec un écart maximal de 1 cm.

5. Système de détection autonettoyant pour véhicule (1) selon l'une quelconque des revendications précédentes, dans lequel le dispositif de nettoyage de vitre (4) est agencé pour émettre deux ou plusieurs faisceaux de nettoyage (RS) dont l'orientation peut être contrôlée.

6. Système de détection autonettoyant pour véhicule (1) selon la revendication 5, dans lequel chaque jet de nettoyage (RS) est associé à une buse (4a), chaque buse (4a) étant associée à un canal d'alimentation en liquide distinct.

7. Système de détection autonettoyant pour véhicule (1) selon la revendication 6, dans lequel une pompe distincte est associée à chaque canal d'alimentation en liquide pour générer la pression de jet du jet de nettoyage (RS).

8. Système de détection autonettoyant pour véhicule (1) selon l'une quelconque des revendications précédentes, dans lequel ledit au moins un capteur (3) est également agencé pour détecter l'environnement à travers la vitre (2).

9. Système de détection autonettoyant pour véhicule (1) selon l'une des revendications précédentes, dans lequel ledit au moins un capteur (3) comprend un capteur de caméra, un capteur LIDAR et/ou un capteur capacitif.

10. Système de détection autonettoyant pour véhicule (1) selon l'une des revendications précédentes, dans lequel le système de détection autonettoyant pour véhicule (1) comporte au moins deux capteurs, un premier capteur étant agencé pour détecter les salissures de la vitre et un deuxième capteur étant optimisé pour la détection de l'environnement.

11. Véhicule comprenant un système de capteur de véhicule autonettoyant (1) selon l'une des revendications précédentes et un phare de véhicule couplé au système de capteur de véhicule (1), le phare de véhicule présentant une vitre de recouvrement à travers laquelle la lumière du phare de véhicule peut être émise vers l'extérieur, l'au moins un capteur (3) étant disposé derrière la vitre de recouvrement et étant conçu pour détecter les salissures de la vitre de recouvrement.
